Europäisches Patentamt

European Patent Office

Office européen des brevets

(19)

(11) **EP 0 769 142 B1**

(12) **EUROPÄISCHE PATENTSCHRIFT**

(45) Veröffentlichungstag und Bekanntmachung des Hinweises auf die Patenterteilung:
**17.07.2002  Patentblatt 2002/29**

(21) Anmeldenummer: **96908018.3**

(22) Anmeldetag: **29.03.1996**

(51) Int Cl.⁷: **G01N 27/419**, G01N 27/406

(86) Internationale Anmeldenummer:
**PCT/DE96/00611**

(87) Internationale Veröffentlichungsnummer:
**WO 96/35120 (07.11.1996 Gazette 1996/49)**

(54) **VORRICHTUNG ZUM ERMITTELN DER KONZENTRATION EINER KOMPONENTE IN EINER GASMISCHUNG**

DEVICE FOR FINDING THE CONCENTRATION OF A COMPONENT IN A GAS MIXTURE

DISPOSITIF DE DETERMINATION DE LA CONCENTRATION D'UN CONSTITUANT DANS UN MELANGE GAZEUX

(84) Benannte Vertragsstaaten:
**DE ES FR GB IT**

(30) Priorität: **03.05.1995  DE 19516139**

(43) Veröffentlichungstag der Anmeldung:
**23.04.1997  Patentblatt 1997/17**

(73) Patentinhaber: **ROBERT BOSCH GMBH**
**70442 Stuttgart (DE)**

(72) Erfinder: **JUNGINGER, Erich**
**D-70191 Stuttgart (DE)**

(56) Entgegenhaltungen:
**EP-A- 0 136 144        DE-A- 3 515 588**
**DE-A- 3 707 874        DE-A- 4 037 740**
**DE-A- 4 304 966        US-A- 5 338 431**

## Beschreibung

Stand der Technik

Die Erfindung betrifft eine Vorrichtung zum Ermitteln der Konzentration einer Komponente in einer Gasmischung. Insbesondere betrifft sie Meßfühler, die zur Regelung der Zusammensetzung des Kraftstoff/Luftgemisches von Brennkraftmaschinen eingesetzt werden. Derartige Meßfühler erfassen den Sauerstoffgehalt im Abgas der Brennkraftmaschine und liefern damit ein Eingangssignal für einen Regelkreis zur Regelung der Gemischzusammensetzung auf vorgegebene Werte.

Gegenstand der vorliegenden Erfindung ist eine Vorrichtung, die im Prinzip so aufgebaut ist, wie eine im SAE-Paper 920234 dargestellte Universalsauerstoffsönde.

Eine Sonde des dort dargestellten Typs weist ein erstes Teilvolumen auf, in dem die Konzentration von Sauerstoff über einen Diffusionswiderstand an die Konzentration von Sauerstoff im Abgas angekoppelt ist. In einem zweiten Teilvolumen herrscht eine Atmosphäre mit einer Referenzsauerstoffkonzentration. Eine zwischen erstem und zweitem Teilvolumen angeordnete Nernstzelle liefert ein für den Unterschied der Sauerstoffkonzentrationen in beiden Teilvolumina charakteristisches Ausgangssignal. Durch Vergleich dieses Ausgangssignals mit einem vorgegebenen Wert läßt sich eine Abweichung der Sauerstoffkonzentration im ersten an das Abgas angekoppelten Volumen von einem Sollwert feststellen. Eine Sauerstoffpumpvorrichtung pumpt Sauerstoffteilchen in einer von der festgestellten Abweichung abhängigen Stromstärke in das erste Teilvolumen hinein oder aus diesem hinaus, so daß die Sauerstoffkonzentration dort gegen den Einfluß der über den Diffusionswiderstand wirkenden Kopplung an die Sauerstoffkonzentration im Abgas konstant gehalten wird.

Die zu ermittelnde Größe, nämlich die Sauerstoffkonzentration im Abgas, läßt sich durch Auswerten des Pumpstroms Ip bestimmen.

Ein Vorteil von Sauerstoffsonden dieses Typs liegt in der näherungsweise linearen Kennlinie Ip = f (lambda), die sich bei einer langsamen stetigen Veränderung der Gemischzusammensetzung lambda ergibt. Wird die Gemischzusammensetzung jedoch schneller moduliert, wie es bei der Gemischregelung für Brennkraftmaschinen üblich ist, ergibt sich bei lambda = 1 eine Hysterese in der Kennlinie. Mit anderen Worten: Der Wert des Ausgangssignals des Meßfühlers in der Nähe von lambda = 1 hängt von der Richtung der Änderung der Gemischzusammensetzung ab.

Die Aufgabe der vorliegenden Erfindung besteht in Beseitigung dieser Hystereseeffekte, bzw. in der Angabe eines Meßfühlers der eingangs genannten Art, dessen Kennlinie keine störenden Hystereseeffekte aufweist.

Diese Aufgabe wird durch die Angabe einer Vorrichtung zum Ermitteln der Konzentration einer Komponente in einer Gasmischung gelöst mit einem ersten Teilvolumen, in dem die Konzentration der Komponente gegen den Einfluß der über einen Diffusionswiderstand wirkenden Kopplung an die Konzentration in der Gasmischung konstant gehalten wird, wobei der genannte Einfluß der Kopplung durch einen steuerbaren Strom von Ionen der Komponente durch einen als Pumpvorrichtung dienenden Festelektrolyten zwischen erstem Teilvolumen und Gasmischung kompensiert wird, so daß ein Maß für den genannten Strom ein Maß für die gesuchte Konzentration in der Gasmischung darstellt, und wobei der genannte Strom als Funktion der Abweichung der Ausgangsspannung einer Nernstzelle von einer Vergleichsspannung gesteuert wird, wobei die Ausgangsspannung zwischen erstem Teilvolumen und einem Referenzgasvolumen, in dem eine Referenzkonzentration der genannten Komponente vorliegt, erfaßt wird, und bei der Mittel vorhanden sind, die die genannte Vergleichsspannung gezielt als Funktion der über dem Festelektrolyten der Pumpvorrichtung meßbaren Spannung beeinflussen.

Die Verwendung der erfindungsgemäßen Vorrichtung erhöht insbesondere die Genauigkeit von Regelkreisen mit stetiger Abhängigkeit der Stellgröße von der Regelabweichung in dem für die Schadstoffkonvertierung wesentlichen Bereich bei stöchiometrischer Gemischzusammensetzung (lambda = 1).

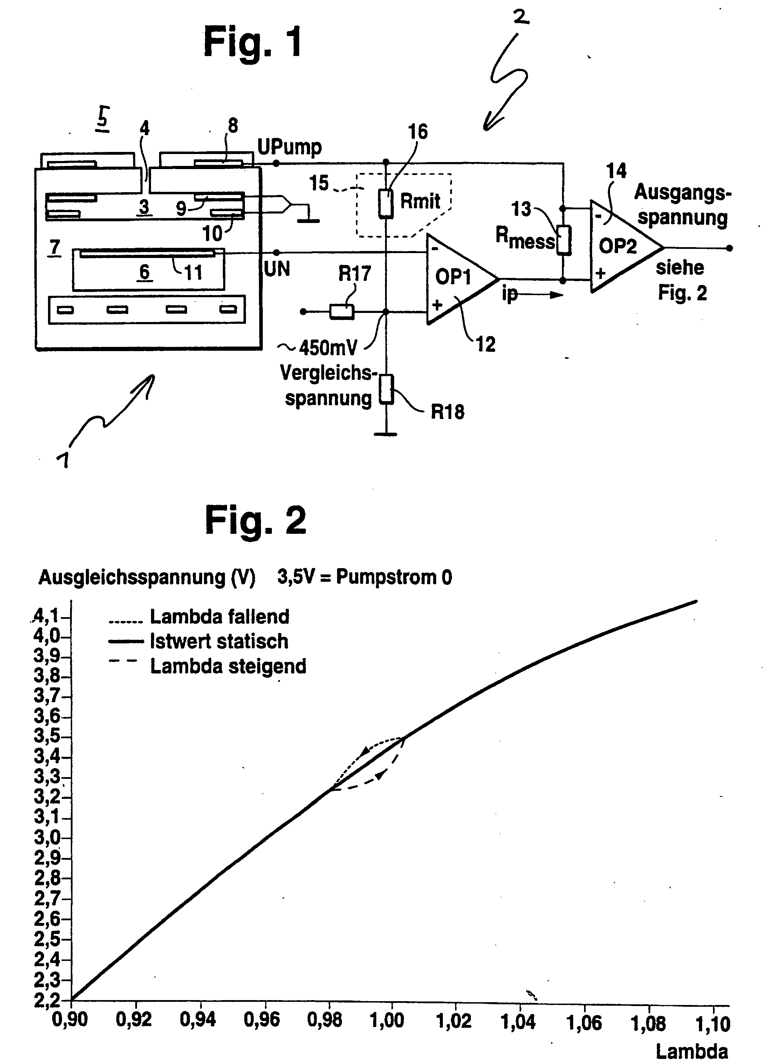

Im folgenden wird die Erfindung anhand eines Beispiels und mit Bezug auf die beiliegenden Zeichnungen näher erläutert, wobei Figur 1 ein Ausführungsbeispiel der erfindungsgemäßen Vorrichtung und Figur 2 Kennlinienverläufe des Ausgangssignals von Sauerstoffmeßvorrichtungen nach dem Stand der Technik und der Erfindung im Vergleich zeigt.

Figur 3 stellt die über dem Elektrolyten der Pumpvorrichtung meßbare Spannung bei einer Vorrichtung nach Bild 1 mit einer Referenzspannung von 450 Millivolt über der von lambda = 0,7 bis 1,3 schwankenden Gemischzusammensetzung dar.

Figur 4 offenbart Alternativen zur Realisierung der erfindungsgemäßen Beeinflussung des Sollwerts.

Die in Figur 1 dargestellte Vorrichtung setzt sich aus einem Sensor 1 und der Beschaltung 2 des Sensors zusammen. Der eigentliche Sensor 1 weist ein erstes Teilvolumen 3 auf, daß über einen hier als kleine Öffnung realisierten Diffusionswiderstand 4 mit dem Abgas 5 verbunden ist. In einem zweiten Teilvolumen 6 herrscht eine Referenzatmosphäre, die beispielsweise durch eine Verbindung zur Außenluft definiert sein kann oder auf andere Weise erzeugt worden ist. Beide Teilvolumina werden von einem sauerstoffionenleitenden Elektrolyten 7 begrenzt, der Elektroden 8, 9, 10 und 11 trägt. Die sich als Folge unterschiedlicher Sauerstoffkonzentrationen in beiden Teilvolumina 3 und 6 einstellende Nernstspannung UN wird dem invertierenden Eingang eines ersten Operationsverstärkers 12 zugeführt, an dessen nicht invertierendem Eingang eine vorgegebene Vergleichsspannung von beispielsweise 450 Millivolt anliegt. Mit der Vergleichsspannung wird ein Sollwert für die Sauerstoffkonzentration im ersten Teilvolumen festgelegt. Ist die Nernstspannung UN kleiner als 450 Millivolt, ist der Ausgang des Operationsverstärkers 12 positiv und treibt einen positiven Strom durch die aus den Elektroden 8, 9 und dem dazwischenliegenden Elektrolyten gebildete Pumpzelle. Mit anderen Worten: Eine vergleichsweise kleine Nernstspannung, die einem Sauerstoffüberschuß im ersten Teilvolumen entspricht, führt zu einem Transport (negativer) Sauerstoffionen vom ersten Teilvolumen zum Abgas. Eine vergleichsweise hohe Nernstspannung führt analog zu einem Sauerstoffteilchenstrom vom Abgas zum ersten Teilvolumen, so daß sich im eingeschwungenen Zustand eine vorgegebene Konzentration von Sauerstoff im ersten Teilvolumen einstellt. Da diese Konzentration durch die über den Diffusionswiderstand 4 wirkende Kopplung gestört wird, stellt der zur Aufrechterhaltung notwendige Pumpstrom Ip letztlich ein Maß für die Sauerstoffkonzentration im Abgas dar.

Der Pumpstrom Ip kann, wie in Figur 1 dargestellt, als Spannungsabfall über einem Meßwiderstand 13 durch einen zweiten Operationsverstärker 14 gemessen werden.

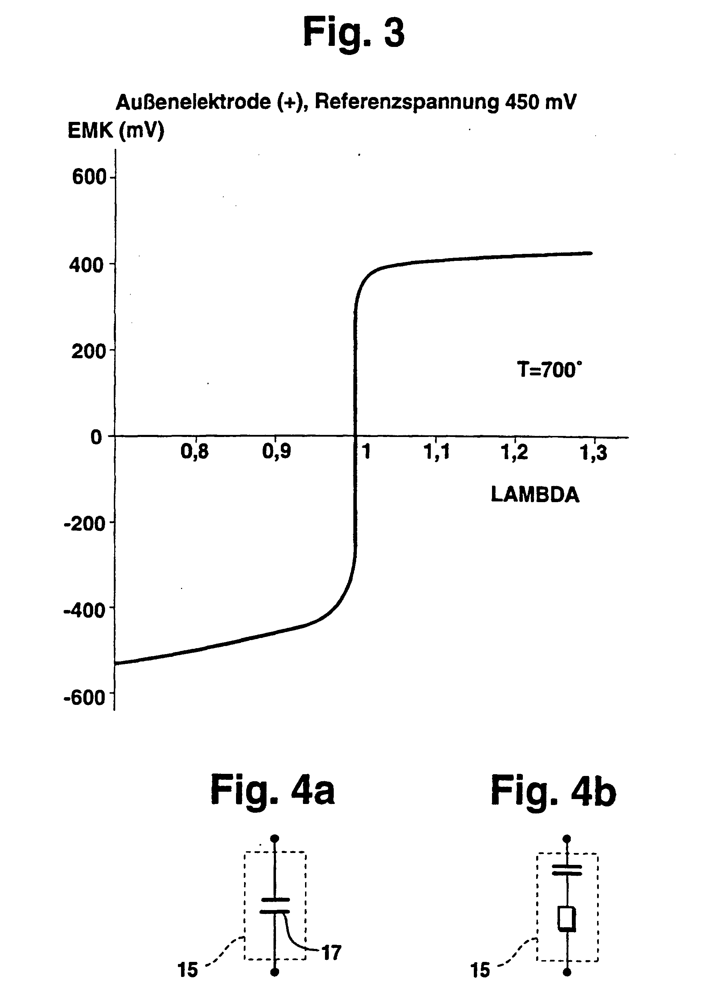

Die bisher beschriebene Vorrichtung entspricht dem Stand der Technik. Sie liefert ein Ausgangssignal, wie es die gestrichelten Linien in den Kennlinien der Figur 2 zeigen. Die unerwünschten Hystereseeffekte bei lambda = 1 hängen mit der sprungartigen Änderung der EMK der Pumpzelle bei lambda = 1 zusammen (siehe dazu Figur 3). Durch die bauartbedingte Kopplung der Pumpzelle mit der Nernstzelle ergibt sich eine störende Mitkopplung der sprungartigen Änderung auf die Nernstspannung UN. Die Änderung der Nernstspannung UN wird über den Pumpstrom ausgeregelt, was eine unerwünschte Änderung des über den Meßwiderstand 13 gemessenen Ausgangssignals des Meßfühlers zur Folge hat. Die Hystereseeffekte im Ausgangssignal zeigen damit Lambdaänderungen an, die nicht vorhanden sind. Um dies zu verhindern, wird erfindungsgemäß ein Teil der Pumpzellen-EMK über ein Mittel 15 auf die Vergleichsspannung mitgekoppelt. Das Mittel 15 kann beispielsweise durch einem ohmschen Widerstand Rmit 16 realisiert sein. Der Wert von Rmit wird vorteilhafterweise so gewählt, daß sich die Vergleichsspannung im gleichen Maß ändert wie die Nernstspannung UN bei Änderungen der Pumpzellen-EMK. Es tritt dann bei einem Durchgang der Sauerstoffkonzentration im Abgas durch lambda = 1 keine störende Pumpstromänderung auf, so daß die Ausgangsspannung des erfindungsgemäßen Meßfühlers an dieser Stelle eindeutig ist.

In dem dargestellten Beispiel wird die Vergleichsspannung im wesentlichen durch die Widerstände R17 und R18 bestimmt. Definiert man eine Mitkopplung M als

$$M = \frac{\dfrac{R17*R18}{R17+R18}}{Rmit + \dfrac{R17*R18}{R17+R18}}$$

ändert sich beispielsweise die Vergleichsspannung bei einer Mitkopplung M = 0,02 und Werten für Rmit = 980 Kiloohm und R17/R18 = 20 Kiloohm um 10 Millivolt, wenn sich die Pumpzellen EMK um 500 Millivolt ändert.

Alternative Realisierungen zur dargestellten proportionalen Mitkoppelung mittels eines ohmschen Widerstandes 16 sind in Figur 4 dargestellt. Sie ergeben sich durch eine integrale Mitkopplung durch eine Kapazität 17 anstelle von Rmit (Fig. 4a) oder durch eine Reihenschaltung aus einer Kapazität und einem ohmschen Widerstand anstelle von Rmit (Fig. 4b).

Die Verwendung des erfindungsgemäßen Meßfühlers ist nicht auf die Messung von Sauerstoffkonzentrationen beschränkt. Durch Verwendung von Elektrolyten, die für Ionen anderer Gaskomponenten leitfähig sind, kann die Erfindung auch zur Messung anderer Konzentrationen eingesetzt werden.

**Patentansprüche**

1. Vorrichtung zum Ermitteln der Konzentration einer Komponente in einer Gasmischung,

   - mit einem ersten Teilvolumen, in dem die Konzentration der Komponente gegen den Einfluß der über einen Diffusionswiderstand wirkenden Kopplung an die Konzentration in der Gasmischung konstant gehalten wird,
   - wobei der genannte Einfluß der Kopplung durch einen steuerbaren Strom von Ionen der Komponente durch einen als Pumpvorrichtung dienenden Festelektrolyten zwischen erstem Teilvolumen und Gasmischung kompensiert wird, so daß ein Maß für den genannten Strom ein Maß für die gesuchte Konzentration in der Gasmischung darstellt,
   - und wobei der genannte Strom als Funktion der Abweichung der Ausgangsspannung einer Nernstzelle von einer Vergleichsspannung gesteuert wird, wobei die Ausgangsspannung zwischen erstem Teilvolumen und einem Bereich, in dem eine Referenzkonzentration der genannten Komponente vorliegt, erfaßt wird, **dadurch gekennzeichnet, daß**
   - Mittel vorhanden sind, die die genannte Vergleichsspannung gezielt als Funktion der über dem Festelektrolyten der Pumpvorrichtung meßbaren Spannung beeinflussen.

2. Vorrichtung nach Anspruch 1, **dadurch gekennzeichnet, daß** ein Teil der über dem Elektrolyten der Pumpvorrichtung meßbaren Spannung über einen ohmschen Widerstand (16) auf die Vergleichsspannung gekoppelt wird.

3. Vorrichtung nach Anspruch 1, **dadurch gekennzeichnet, daß** ein Teil der über dem Elektrolyten der Pumpvorrichtung meßbaren Spannung über eine Kapazität (17) auf die Vergleichsspannung gekoppelt wird.

4. Vorrichtung nach Anspruch 1, **dadurch gekennzeichnet, daß** ein Teil der über dem Elektrolyten der Pumpvorrichtung meßbaren Spannung über eine Reihenschaltung aus einem ohmschen Widerstand und einer Kapazität (17) auf die Vergleichsspannung eingekoppelt wird.

5. Vorrichtung nach einem der vorhergehenden Ansprüche, **dadurch gekennzeichnet, daß** die Mittel, die die genannte Vergleichsspannung gezielt als Funktion der über dem Festelektrolyten der Pumpvorrichtung meßbaren Spannung beeinflussen so dimensioniert sind, daß sich die Vergleichsspannung im gleichen Maß ändert wie die Nernstspannung bei einer Änderung der über dem Elektrolyten der Pumpvorrichtung meßbaren Spannung.

**Claims**

1. Device for determining the concentration of a component in a gas mixture,

   - having a first subsidiary volume, in which the component's concentration is kept constant against the effect of the coupling, which acts through a diffusion resistance, with the concentration in the gas mixture,
   - the said effect of the coupling being compensated for by a controllable flow of the component's ions through a solid electrolyte, which acts as a pump device, between the first subsidiary volume and the gas mixture, so that a measure of the said flow represents a measure of the concentration of interest in the gas mixture,
   - and the said flow being controlled as a function of the deviation of a Nernst cell's output voltage from a comparison voltage, the output voltage being measured between the first subsidiary volume and a region in which a reference concentration of the said component is present, **characterized in that**
   - means are provided which affect the said comparison voltage in a specific manner as a function of the voltage measurable across the solid electrolyte of the pump device.

2. Device according to Claim 1, **characterized in that** a part of the voltage measurable across the electrolyte of the pump device is coupled to the comparison voltage through a resistor (16).

3. Device according to Claim 1, **characterized in that** a part of the voltage measurable across the electrolyte of the pump device is coupled to the comparison voltage through a capacitor (17).

4. Device according to Claim 1, **characterized in that** a part of the voltage measurable across the electrolyte of the pump device is coupled to the comparison voltage through a series circuit comprising a resistor and a capacitor (17).

5. Device according to one of the preceding claims, **characterized in that** the means which affect the said comparison voltage in a specific manner as a function of the voltage measurable across the solid electrolyte of the pump device are dimensioned in such a way that the comparison voltage changes to the same extent as the Nernst voltage in the event of a change in the voltage measurable across the electrolyte of the pump device.

**Revendications**

1. Dispositif pour déterminer la concentration d'un composant d'un mélange gazeux comprenant un premier volume partiel dans lequel

   - on maintient constante la concentration du composant contre l'influence du couplage agissant sur la concentration par une résistance de diffusion dans le mélange gazeux,
   - on compense l'influence du couplage par un courant commandé d'ions du composant à travers un électrolyte solide servant de dispositif de pompage entre le premier volume partiel et le mélange gazeux de sorte qu'une mesure du courant représente une mesure de la concentration recherchée dans le mélange gazeux, et
   - on commande le courant en fonction de la déviation de la tension de sortie d'une cellule de Nernst en commandant à partir d'une tension de comparaison et on détecte la tension de sortie entre un premier volume partiel et une zone dans laquelle on a une concentration de référence du composant indiqué,

   **caractérisé par**
   des moyens qui influencent la tension de comparaison, de manière intentionnelle en fonction de la tension mesurable sur l'électrolyte solide du dispositif de pompage.

2. Dispositif selon la revendication 1,

**EP 0 769 142 B1**

**caractérisé en ce qu'**
une partie de la tension mesurable sur l'électrolyte du dispositif de pompage est couplée par une résistance ohmique (16) à la tension de comparaison.

3. Dispositif selon la revendication 1,
   **caractérisé en ce qu'**
   une partie de la tension mesurable par l'électrolyte du dispositif de pompage est couplée par une capacité (17) à la tension de comparaison.

4. Dispositif selon la revendication 1,
   **caractérisé en ce qu'**
   une partie de la tension mesurable sur l'électrolyte du dispositif de pompage est couplée par le montage en série formé d'une résistance ohmique et d'une capacité (17) sur la tension de comparaison.

5. Dispositif selon l'une des revendications précédentes,
   **caractérisé en ce que**
   les moyens qui influencent la tension de comparaison, de manière intentionnelle comme fonction de la tension mesurée sur l'électrolyte solide du dispositif de pompage sont dimensionnés pour que la tension de comparaison varie de la même mesure que la tension de Nernst en cas de variation de la tension mesurable par l'électrolyte du dispositif de pompage.

# Fig. 1

# Fig. 2

# Fig. 3

**Außenelektrode (+), Referenzspannung 450 mV**

EMK (mV)

T=700°

LAMBDA

# Fig. 4a

# Fig. 4b

15

17

15